# EUROPÄISCHE PATENTSCHRIFT

(11) **EP 0 918 924 B1**
(45) Veröffentlichungstag und Bekanntmachung des Hinweises auf die Patenterteilung: **26.04.2000**
(21) Anmeldenummer: 97941823.3
(22) Anmeldetag: 25.08.1997
(51) Int. Cl.: F02G 1/043, H02K 49/10

(54) **KOLBENMOTOR, INSBESONDERE STIRLINGMOTOR**
PISTON ENGINE, IN PARTICULAR A STIRLING ENGINE
MOTEUR A PISTON, NOTAMMENT MOTEUR STIRLING

(30) Priorität: 24.08.1996 DE 29614666 U
(43) Veröffentlichungstag der Anmeldung: 02.06.1999
(73) Patentinhaber: Sachsenring Entwicklungsgesellschaft mbH, 08058 Zwickau (DE)
(72) Erfinder: RITTINGHAUS, Ernst, Wilhelm, D-58675 Hemer (DE)
(74) Vertreter: Hufnagel, Walter, Dipl.-Ing., Dipl.-Wirtsch.-Ing.
(86) Internationale Anmeldenummer: DE9701845
(87) Internationale Veröffentlichungsnummer: WO9807972

(56) Entgegenhaltungen:
- EP-A- 0 255 723
- DE-U- 29 508 668
- US-A- 4 677 825

## Beschreibung

Die vorliegende Erfindung bezieht sich auf einen Kolbenmotor gemäß dem Oberbegriff des Anspruchs 1.

Bei derartigen Motoren mit hohem Innendruck im Kurbelgehäuse besteht das Problem, die Abtriebswelle dicht aus dem Kurbelgehäuse herausführen zu müssen. Bei hohen Innendrücken von beispielsweise 30 bis 120 bar stellt dies hohe Anforderungen an die Dichtungskonstruktion bezüglich Dichtheit und geringer Reibung.

Mit der vorliegenden Erfindung soll die Aufgabe gelöst werden, die Kraftübertragung von der Kurbelwelle nach außen zur Abtriebswelle vollkommen dicht und möglichst reibungsarm auszuführen.

Gelöst wird diese Aufgabe durch die Merkmale des Anspruchs 1.

Die vorliegende Erfindung zeichnet sich insbesondere dadurch aus, daß das Kurbelgehäuse ohne Durchführungen vollkommen gasdicht ausgebildet werden kann. Zugleich entstehen keinerlei Reibungsverluste, wie sie ansonsten bei den erforderlichen Dichtungen für die Abtriebswelle auftreten.

Aus der US-A-4 677 825 ist es zwar bereits bekannt, bei einem Stirlingmotor eine aus Stator und Rotor bestehende magnetische Kupplung zwischen dem Motorgehäuse und einer Zentralachse vorzusehen. Bei diesem Stirlingmotor arbeiten die Arbeitskolben durch die ihnen zugeordneten Kurbelwellen nach Art eines Planetengetriebes auf eine Zentralachse. Das Gehäuse bildet hierbei das Sonnenrad und die gezahnten Kurbelscheiben dienen als Planetenräder. Durch die magnetische Kupplung zwischen Gehäuse und Zentralachse kann bei fester Zentralachse eine Drehzahlregelung des drehbaren Gehäuses unter Beibehaltung einer festen Hubzahl je Zeiteinheit der Arbeitskolben durchgeführt werden. Das Kurbelgehäuse steht jedoch hierbei nicht unter Druck, vielmehr ist im Kurbelgehäuse ein Vorrat an Schmiermittel vorhanden, um die Lager der Zentralachse ständig zu schmieren. Zwischen Stator und Rotor der magnetischen Kupplung ist auch keine Gehäusewand vorgesehen, sondern lediglich der bei Elektromotoren in üblicher Weise vorhandene Luftspalt.

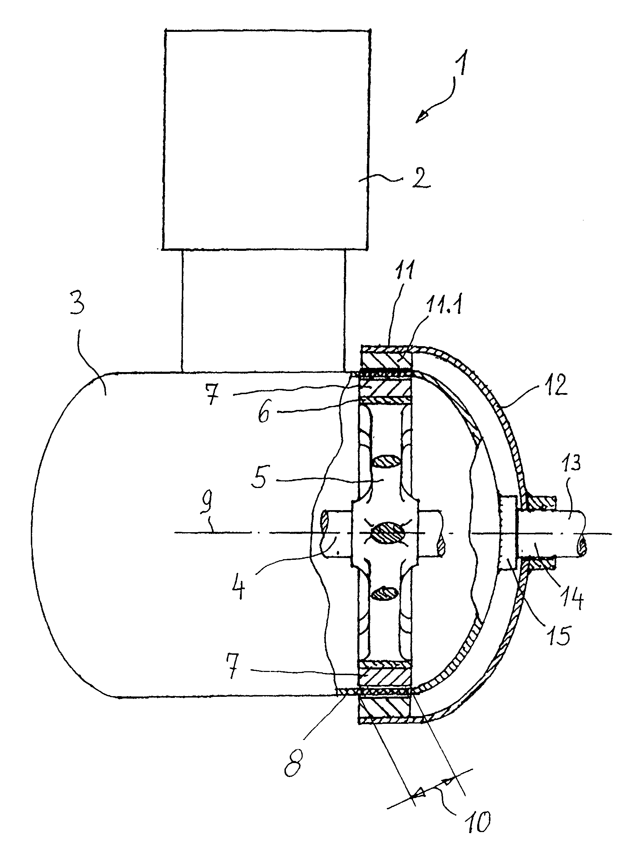

Weitere vorteilhafte Einzelheiten der Erfindung sind in den Unteransprüchen angegeben und werden nachfolgend anhand eines in der Zeichnung veranschaulichten Ausführungsbeispiels näher beschrieben.

Die einzige Figur der Zeichnung zeigt die Ansicht und einen Teilschnitt eines Kolbenmotors gemäß der vorliegenden Erfindung.

Mit 1 ist ein Kolbenmotor, insbesondere ein Stirlingmotor, bezeichnet. Er besitzt einen Zylinder 2 und ein Kurbelgehäuse 3. Das Kurbelgehäuse 3 steht unter einem sehr hohen Innendruck von etwa 30 bis 120 bar und ist vollkommen gasdicht ausgeführt.

Erfindungsgemäß ist mit der Kurbelwelle 4 ein Kupplungsrad 5 starr gekuppelt. Das Kupplungsrad 5 trägt auf einem konzentrisch zur Kurbelwelle 4 vorgesehenen Radkranz 6 über den Umfang verteilt Permanentmagnete 7. Die Außenflächen der Permanentmagnete 7 sind an die dort vorhandene Kreisform des Kurbelgehäuses 3 angepaßt und sind in geringem Abstand von etwa 0,3 bis 1,5 mm, insbesondere von etwa 0,8 mm, zu der Gehäusewand 8 des Kurbelgehäuses 3 um die Drehachse 9 der Kurbelwelle 4 drehbar gelagert.

In einem Bereich 10, in dem die Permanentmagnete 7 die Gehäusewand 8 abschatten, besteht die Gehäusewand 8 aus einem elektrisch nicht leitenden und unmagnetischen Material.

Als Materialien hierfür eignen sich Thermoplaste, Duroplaste oder auch keramische Werkstoffe bzw. antimagnetischer Stahl.

Als Thermoplast kommt insbesondere einer der Kunststoffe Polyamid PA, Polysulfon PES, Polyätherätherketon PEEK oder Polytetrafluoräthylen PTFE in Betracht. Diese Kunststoffe können mit Glas-, Kohle- oder Mineralfasern verstärkt sein.

Als Duroplaste kommen insbesondere Phenolharze PF oder Melaminharze MF in Betracht. Auch diese Kunststoffe können mit Glas-, Kohle- oder Mineralfasern verstärkt sein.

Möglich ist auch der Einsatz keramischer Werkstoffe, insbesondere von Aluminiumoxyd Al₂O₃ oder die Verwendung von antimagnetischem Stahl.

Die in die Thermo- oder Duroplaste eingebrachten Verstärkungen können auch eine gewickelte Struktur aufweisen.

Auf der Außenseite des Kurbelgehäuses 3 ist ein Außenläufer 11 mit einem Magnetbereich 11.1 vorgesehen, der den Bereich 10 überdeckt und der in diesem Bereich 10 magnetisch oder magnetisierbar ist und der die Gehäusewand 8 mit geringen Abstand von etwa 0,3 mm bis 1,5 mm, insbesondere etwa 0,8 mm, umfaßt. Der Magnetbereich 11.1 besteht beispielsweise aus Permanentmagneten oder wenigstens aus einer Wicklung oder aus einer Kurzschlußwicklung, beispielsweise einem Kurzschlußanker mit einem Kurzschlußkäfig.

Der Außenläufer 11 ist über einen Träger, beispielsweise über eine Halteglocke 12, mit einer Abtriebswelle 13 starr gekuppelt. Die Abtriebswelle 13 verläuft koaxial zur Drehachse 9 der Kurbelwelle 4. Sie ist an dem den Kurbelgehäuse 3 zugewandten Ende 14 in einem am Kurbelgehäuse 3 vorgesehenen Außenlager 15 drehbar gelagert.

Anstelle der Permanentmagnete 7 können auch Elektromagnete vorgesehen sein. Zur Erregung derselben kann im Kurbelgehäuse 3 ein mit der Kurbelwelle 4 gekuppelter elektrischer Generator vorgesehen sein.

Die Permanentmagnete 7 bzw. die Elektromagnete bilden mit dem Außenläufer 11 bzw. mit dessen magnetischer Wirkung im Magnetbereich 11.1 eine magnetische bzw. elektromagnetische Kupplung.

## Patentansprüche

1. Kolbenmotor, insbesondere Stirlingmotor, mit einem dichten, unter Druck stehenden Kurbelgehäuse, dadurch gekennzeichnet, daß der Abtrieb von der Kurbelwelle (4) zu einer außerhalb des Kurbelgehäuses (3) vorgesehenen Abtriebswelle (13) durch eine durch die Gehäusewand (8) des Kurbelgehäuses (3) hindurch wirkende Magnetkupplung oder elektromagnetische Kupplung (7, 11) erfolgt.

2. Kolbenmotor nach Anspruch 1, dadurch gekennzeichnet, daß auf einem zur Kurbelwelle (4) konzentrischen Kreis mit der Kurbelwelle (4) starr gekuppelte Permanent- oder Elektromagnete (7) in geringem Abstand zur Gehäusewand (8) rotierbar angeordnet sind, daß die Gehäusewand (8) zumindest im von den eng angrenzenden Magneten (7) abgeschatteten Bereich (10) aus elektrisch nicht leitendem, unmagnetischem Material besteht und außen in diesem Bereich (10) ein mit der Abtriebswelle (13) gekuppelter, koaxial zur Drehachse (9) der Kurbelwelle (4) drehbar gelagerter Außenläufer (11) mit einem im Bereich (10) magnetischen oder magnetisierbaren Bereich, insbesondere mit wenigstens einer elektrischen Wicklung, vorgesehen ist.

3. Kolbenmotor nach Anspruch 2, dadurch gekennzeichnet, daß der Außenläufer (11) ein Kurzschlußläufer ist.

4. Kolbenmotor nach einem der Ansprüche 1 bis 3, dadurch gekennzeichnet, daß das Kurbelgehäuse (3) in Verlängerung der Drehachse (9) der Kurbelwelle (4) ein Außenlager (15) zur Lagerung der Abtriebswelle (13) aufweist.

5. Kolbenmotor nach einem der Ansprüche 1 bis 4, dadurch gekennzeichnet, daß der Außenläufer (11) das Kurbelgehäuse (3) im Wirkungsbereich glockenförmig umfaßt.

6. Kolbenmotor nach einem der Ansprüche 1 bis 5, dadurch gekennzeichnet, daß das Material für den von den Magneten (7) abgeschatteten Bereich (10) aus einem Thermoplast besteht.

7. Kolbenmotor nach Anspruch 6, dadurch gekennzeichnet, daß als Thermoplast einer der Kunststoffe Polyamid (PA), Polysulfon (PES), Polyätherätherketon (PEEK) oder Polytetrafluoräthylen (PTFE) vorgesehen ist.

8. Kolbenmotor nach Anspruch 7, dadurch gekennzeichnet, daß diese Kunststoffe mit Glas-, Kohle- oder Mineralfasern verstärkt sind.

9. Kolbenmotor nach einem der Ansprüche 1 bis 5, dadurch gekennzeichnet, daß das Material für den von den Magneten (7) abgeschatteten Bereich (10) aus einem Duroplast besteht.

10. Kolbenmotor nach Anspruch 9, dadurch gekennzeichnet, daß als Duroplast einer der Kunststoffe Phenolharz (PF) oder Melaminharz (MF) vorgesehen ist.

11. Kolbenmotor nach Anspruch 10, dadurch gekennzeichnet, daß diese Kunststoffe mit Glas-, Kohle- oder Mineralfasern verstärkt sind.

12. Kolbenmotor nach einem der Ansprüche 1 bis 5, dadurch gekennzeichnet, daß das Material für den von den Magneten (7) abgeschatteten Bereich (10) aus einem keramischen Werkstoff, beispielsweise Aluminiumoxyd (Al₂O₃) oder aus einem antimagnetischen Stahl besteht.

13. Kolbenmotor nach einem der Ansprüche 1 bis 12, dadurch gekennzeichnet, daß die in die Thermo- oder Duroplaste eingebrachten Verstärkungen eine gewickelte Struktur aufweisen.

## Claims

1. Piston engine, in particular Stirling engine, with a sealed, pressurised crankcase, characterised in that the drive from the crankshaft (4) to an output shaft (13) provided outside the crankcase (3) is effected through a magnetic clutch or electromagnetic clutch (7, 11) acting through the housing wall (8) of the crankcase (3).

2. Piston engine according to claim 1, characterised in that permanent magnets or electromagnets (7) coupled rigidly to the crankshaft (4) on a circle concentric with the crankshaft (4) are disposed rotatably a short distance from the housing wall (8), in that the housing wall (8) at least in the area (10) shaded from the closely adjacent magnets (7) is made of electrically nonconducting non-magnetic material and externally in this area (10) an external rotor (11) mounted rotatably coaxial with the rotational axis (9) of the crankshaft (4) and coupled to the output shaft (13) is provided with a magnetic or magnetisable area, in particular with at least one electrical winding, in the area (10).

3. Piston engine according to claim 2, characterised in that the external rotor (11) is a squirrel cage circuit rotor.

4. Piston engine according to one of claims 1 to 3, characterised in that the crankcase (3) exhibits an external bearing (15) for supporting the output shaft (13) in the extension of the rotational axis (9) of the crankshaft (4).

5. Piston engine according to one of claims 1 to 4, characterised in that the external rotor (11) embraces the crankcase (3) in the area of action in the shape of a bell.

6. Piston engine according to one of claims 1 to 5, characterised in that the material for the area (10) shaded from the magnets (7) consists of a thermoplastic.

7. Piston engine according to claim 6, characterised in that one of the plastics polyamide (PA), polysulphonate (PES), polyether ether ketone (PEEK) or polytetrafluorethylene (PTFE) is provided as the thermoplastic.

8. Piston engine according to claim 7, characterised in that these plastics are reinforced with glass, carbon or mineral fibres.

9. Piston engine according to one of claims 1 to 5, characterised in that the material for the area (10) shaded from the magnets (7) consists of a duroplastic.

10. Piston engine according to claim 9, characterised in that one of the plastics phenol resin (PF) or melamine resin (MF) is provided as the duroplastic.

11. Piston engine according to claim 10, characterised in that these plastics are reinforced with glass, carbon or mineral fibres.

12. Piston engine according to one of claims 1 to 5, characterised in that the material for the area (10) shaded from the magnets (7) consists of a ceramic material, for example aluminium oxide (Al₂O₃) or of an anti-magnetic steel.

13. Piston engine according to one of claims 1 to 12, characterised in that the reinforcements incorporated in the thermoplastics or duroplastics exhibit a wound structure.

## Revendications

1. Moteur à piston, en particulier moteur Stirling comprenant un carter de vilebrequin étanche, se trouvant sous pression,
caractérisé en ce que
la prise de force allant de l'arbre du vilebrequin (4) à un arbre de sortie (13), prévu en dehors du carter du vilebrequin (3), a lieu par l'intermédiaire d'un accouplement magnétique ou d'un embrayage électromagnétique (7, 11), agissant à travers la paroi (8) du carter du vilebrequin (3).

2. Moteur à piston, selon la revendication 1,
caractérisé en ce que
- des aimants permanents ou des électroaimants (7) accouplés rigidement et sur un cercle concentrique à l'arbre du vilebrequin (4) sont disposés de façon à pouvoir tourner à une faible distance de la paroi du carter (8),
- la paroi du carter (8) est réalisée en une matière non conductrice de l'électricité, amagnétique au moins dans la zone (10) obscurcie par les aimants (7) étroitement adjacents, et
- on prévoit à l'extérieur dans cette zone (10) un induit extérieur (11) couplé à l'arbre de sortie (13), monté de façon à pouvoir tourner coaxialement par rapport à l'axe de rotation (9) de l'arbre du vilebrequin (4) avec une zone magnétique ou magnétisable dans la zone (10), en particulier avec au moins un enroulement électrique.

3. Moteur à piston, selon la revendication 2,
caractérisé en ce que
l'induit extérieur (11) est un rotor en court-circuit.

4. Moteur à piston selon l'une des revendications 1 à 3,
caractérisé en ce que
la carter du vilebrequin (3) présente dans le prolongement de l'axe de rotation (9) de l'arbre du vilebrequin (4) un palier extérieur (15) pour recevoir l'arbre de sortie (13).

5. Moteur à piston selon l'une des revendications 1 à 4,
caractérisé en ce que
l'induit extérieur (11) comprend en forme de cloche le carter du vilebrequin (3) dans la zone opérationnelle.

6. Moteur à piston selon l'une des revendications 1 à 5,
caractérisé en ce que
la matière pour la zone (10) obscurcie par les aimants (7) est une matière thermoplastique.

7. Moteur à piston selon la revendication 6,
caractérisé en ce qu'
on prévoit comme matière thermoplastique l'une des matières suivantes : un polyamide (PA), un polysulfone (PES), un polyétheréthercétone (PEEK), ou un polytétrafluoréthylène (PTFE).

8. Moteur à piston selon la revendication 7,
caractérisé en ce que
ces matières plastiques sont renforcées par des fibres de verre, de carbone, ou des fibres minérales.

9. Moteur à piston selon l'une des revendications 1 à 5,
caractérisé en ce que
la matière pour la zone obscurcie (10) par les aimants (7) est une résine thermodurcissable.

10. Moteur à piston selon la revendication 9,
caractérisé en ce que
l'on prévoit comme résine thermodurcissable l'une des matières plastiques suivantes : une résine phénolique (PF) ou une résine mélaminée (MF).

11. Moteur à piston selon la revendication 10,
caractérisé en ce que
ces matières plastiques sont renforcées par des fibres de verre, de carbone ou par des fibres minérales.

12. Moteur à piston selon l'une des revendications 1 à 5,
caractérisé en ce que
la matière pour la zone (10) obscurcie par les aimants (7) est une matière céramique, par exemple de l'alumine (Al₂O₃) ou un acier antimagnétique.

13. Moteur à piston selon l'une des revendications 1 à 12,
caractérisé en ce que
les renforcements mis dans la matière thermoplastique ou dans la résine thermodurcissable présentent une structure enroulée.
